(19) Europäisches Patentamt
European Patent Office
Office européen des brevets

(11) Veröffentlichungsnummer: **0 235 764 A2**

(12) # EUROPÄISCHE PATENTANMELDUNG

(21) Anmeldenummer: **87102829.6**

(22) Anmeldetag: **27.02.87**

(51) Int. Cl.⁴: **G 06 F 15/16**, G 06 F 15/60

(30) Priorität: **05.03.86 DE 3607241**

(43) Veröffentlichungstag der Anmeldung: **09.09.87 Patentblatt 87/37**

(84) Benannte Vertragsstaaten: **CH DE FR GB IT LI SE**

(71) Anmelder: **Thomas, Gerhard G., Weinmeisterhornweg 80, D-1000 Berlin 20 (DE)**
Anmelder: **Mitterauer, Bernhard Dr., Viehhausen 59, A-5071 Wals bei Salzburg (AT)**

(72) Erfinder: **Thomas, Gerhard G., Weinmeisterhornweg 80, D-1000 Berlin 20 (DE)**
Erfinder: **Mitterauer, Bernhard Dr., Viehhausen 59, A-5071 Wals bei Salzburg (AT)**

(74) Vertreter: **Haft, Berngruber, Czybulka, Postfach 14 02 46, D-8000 München 5 (DE)**

(54) **Rechner.**

(57) Die Erfindung bezieht sich auf einen Rechner, insbesondere zur Simulation biologischer Prozesse. Kernstück des Rechners ist ein zentrales Logik/Rechensystem (2), das als n-wertiger Permutograph aufgebaut ist. Das Negationsnetz dieses Permutographen besteht aus einzelnen Knotenrechnern, die über Informations- bzw. Negationsleitungen (22, 32) mit anderen Knotenrechnern verbunden sind. In jedem Knotenrechner (21) ist das Negationsnetz des Permutographen in einer Subknoteneinheit (26) enthalten. Der Gesamtrechner kann von aussen oder intern gesteuert werden, so dass sich ein intentionaler Rechner ergibt.

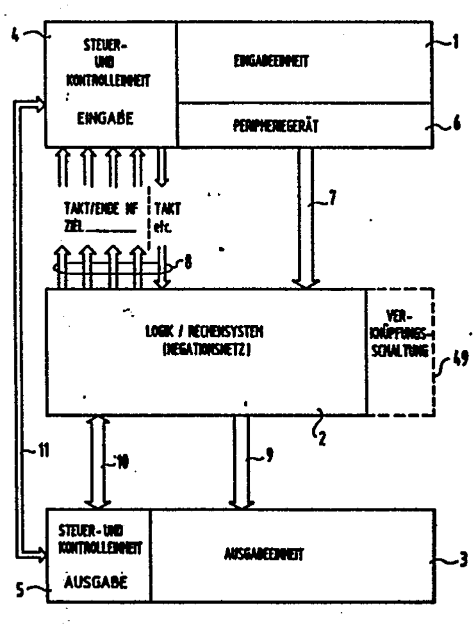


EP 0 235 764 A2

## Beschreibung

Die Erfindung bezieht sich auf einen Rechner gemäß dem Oberbegriff des Patentanspruches 1.

Bisherige Digitalrechner arbeiten insgesamt und in allen ihren Untersystemen mit einer digitalen, d. h. zweiwertigen Logik, deren Grundbausteine Bits mit den Werten Null und Eins bzw. Hoch und Tief sind. Der Datenfluß innerhalb solcher klassischer Digitalrechner - z. B. Adressen, Befehle, Funktionsdaten, etc.- setzt sich aus Datenwörtern zusammen, die jeweils eine Folge derartiger Bits sind. Je höher die Speicher- und Rechenkapazität eines solchen klassischen Rechners ist, desto größer wird auch dessen Raumbedarf und desto schwieriger dessen Steuerung und Kontrolle. Auch moderne Großrechner aus mehreren parallel arbeitenden Subrechnern haben eine Kapazitätsgrenze hinsichtlich Speicherplätzen und Rechenzeit bei immer noch hohem Raumbedarf, die eine Berechnung oder Simulierung komplizierter, so etwa biologischer Prozesse praktisch nicht erlaubt.

Der Erfindung liegt die Aufgabe zugrunde, einen Rechner und allgemein das Aufbauprinzip für einen Rechner anzugeben, der bei geringem Raumbedarf mit einer erheblich größeren Anzahl von Speichermöglichkeiten auszurüsten ist als herkömmliche Rechner und der die Berechnung komplizierter Prozesse, insbesondere selbststeuernder biologischer Prozesse ermöglicht.

Diese Aufgabe ist gemäß der Erfindung durch die im kennzeichnenden Teil des Patentanspruches 1 angegebenen Merkmale gelöst.

Der vorgeschlagene Rechner ist hinsichtlich Aufbau und Funktion ein transklassischer Rechner. Er arbeitet mit einer

neuen Logik, hat durch die Darstellung des Gesamtrechners in jedem Knotenrechner die Fähigkeit der hardwaremäßigen Selbstkonstruktion und gegebenenfalls Umstrukturierung analog dem biologischen System des Gehirns. Er kann als intentionaler Rechner bezeichnet werden.

In dem Rechner gemäß der Erfindung bilden die in klassischen Computern als Logik, Informationsmuster, d. h. Bitfolge, Speicher, Programmbefehle und Programmiersprachen bezeichneten Module eine aufeinander harmonisch abgestimmte Einheit. Mit anderen Worten: Software, Hardware, Organisationsstruktur und auch die Problemanalyse als formales System bilden eine Einheit. Erreicht wird das durch das Zusammenspiel von mehrwertiger Logik, qualitativer Mathematik und kybernetischer Systemtheorie. Für die Integration des Ganzen kommt der mehrwertigen Logik die Hauptrolle zu, die von G. Günther in dem Hegel-Jahrbuch 1979, Verlag Pahl-Rugenstein, Köln, 1980, in dem Artikel "Identität, Gegenidentität und Negativsprache" dargestellt und weiterentwickelt worden ist. Die Logik wird deshalb als "Günther-Logik" bezeichnet.

Gemäß der Erfindung wird hinsichtlich Material und Anwendungsmöglichkeiten auf komplexe Systeme ein kompakter Rechner zur Verfügung gestellt, der der Vernetzung von Neuronen im menschlichen Gehirn nachempfunden wurde. Der Rechner erlaubt, die erwähnten Kapazitätsgrenzen vorhandener auch modernster Rechner hinsichtlich Rechenzeit und Speicherplätzen um Größenordnungen zu erweitern, so daß "astronomisch" viele Möglichkeiten der Erzeugung von Informationen mit sehr kurzen Verarbeitungszeiten vereint werden können.

Das Kernstück im Aufbau des Rechners ist die Verwendung eines Negationsnetzes für das Logik- und Rechensystem, für

das vorzugsweise (n-1) Negatoren einer n-wertigen Logik als grundlegende Operationsbasis benutzt werden. Ein Negationsnetz aus mehr, bis zu $\binom{n}{2}$ Negatoren ist, wenn auch bei komplizierterem Aufbau, möglich. Aus dem Negationsnetz können weitere logische Operatoren klassischer und transklassischer Art abgeleitet werden. Der dieser Negationslogik zugrundeliegende Funktionsprozess wurde mathematisch von G. G. Thomas in dem Aufsatz "On Permutographs" beschrieben, der veröffentlicht wurde in "Supplemento ai Rendiconti del Circolo Matematico di Palermo, Serie II/2, 1982, Seiten 275 - 286.

Permutographen werden gebildet aus Knoten und diese nach einem bestimmten Operationsschema verbindenden Kanten, die in einem Rechner gemäß der Erfindung als Knotenrechner und Informationsleitungen dargestellt sind. Dieses Netzwerk aus Knotenrechnern und Informationsleitungen entspricht beim Gehirn der Vernetzung von Neuronen und Dendriten und bildet ein komplexes Vermittlungsnetz für n Werte und daraus zusammengesetzte Datensätze. Die einzelnen n Werte des Gesamtsystems werden als Urqualitäten bezeichnet, d. h. einzelne zu unterscheidende Erkenntnisbereiche.

Für n = 5, d. h. für eine 5-wertige Logik, ist ein schematischer Schaltplan für ein Negationsnetz in Fig. 1 dargestellt. Dabei entsprechen den als Kreisen dargestellten Knotenrechnern n! = 120 Permutationen entsprechend logisch zu unterscheidenden Negationszuständen. Die einzelnen Permutationen sind zahlenmäßig von 1 bis 120 durchnummeriert, wobei man sich für jede Zahl eine der 120 Permutationen vorstellen muß. So ist z. B. die in der oberen Schicht 1 angegebene Permutation ① als "1 2 3 4 5" zu lesen. Diese Permutation kann durch Anwendung des Negators N2, d. h. durch Vertauschen der Werte 2 und 3 in die Permutation ⑦

entsprechend "1 3 2 4 5" überführt werden. Die Negatoren, d. h. Umtauschoperatoren aufeinanderfolgender Zahlenwerte innerhalb von Permutationen sind in dieser Figur lediglich durch den kleineren Zahlenwert dargestellt.

~~Die Verbindungen zwischen den einzelnen Knotenrechnern werden durch Informationsleitungen hergestellt, denen jeweils ein solcher Negator zugeordnet is~~t. Die Verbindungen zwischen den n! Knotenrechnern sind Informationsleitungen, denen jeweils ein Negator $N_{ij}$ zugeordnet ist, dergestalt, daß bei Aktivierung dieser Informationsleitung die Werte i und j innerhalb der Permutation ihre Plätze tauschen, was allgemein als Transposition bezeichnet wird. Bilden die n Werte eine minimale Kontextur CT, die graphentheoretisch "Baum" genannt wird, so genügen (n-1) Negatoren, um das Netzwerk für alle n! Knoten aufzubauen. Dies wird auch für den Rechner gemäß der Erfindung und für das schematische Schaltbild in Fig. 1 ausgenützt. Die Kontextur gibt die zulässigen Umtauschverhältnisse für die n Werte an. Man unterscheidet zwischen verschiedenen Kontexturen, so z. B. zwischen Linien- und Sternkontexturen; vgl. "On Permutographs". Zum Beispiel ist

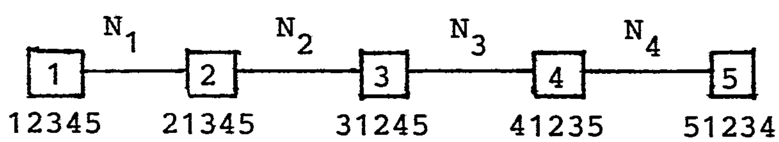


eine LINIEN-Kontextur für fünf Werte. Die fünf zu unterscheidenden Urqualitäten 1 bis 5 werden durch vier Negatoren, d. h. Umtauschoperatoren miteinander vermittelt. Bei einem Rechner gemäß der Erfindung bedeutet dieses, daß die Urqualitäten den einzelnen Schichten zugeordnet sind, so daß die Knotenrechner in der ersten Schicht durch Informationsleitungen jeweils mit Knotenrechnern der zweiten Schicht verbunden sind, wobei allen Informationsleitungen der Negator $N_1$ zugeordnet ist. Entsprechend gilt für die Schichten [2] und [3] der Negator $N_2$ usw.

Mit Hilfe dieses Negationsnetzes können weitere logische Operatoren konstruiert werden. Über die Speicherstruktur, d. h. Kontextur CT, die Konstruktionsvorschriften enthält, wie die n Werte vermittelbar sind, werden somit die n! Knoten zum Negationsnetz verknüpft. Jede Permutation der n Werte drückt die Identität des jeweiligen Knotenrechners aus und gilt gleichzeitig als dessen Adresse. Die Umtauschoperation durch die Negatoren $N_1$, $N_2$, $N_3$ und $N_4$ ist in Fig. 1 anhand der Permutationen (1), (25), (49), (73), und (97) dargestellt. Die zugehörigen Permutationen 1 2 3 4 5, 2 1 3 4 5, 3 1 2 4 5, 4 1 2 3 5 und 5 1 2 3 4 sind in eckigen Klammern beigefügt. Das angegebene Negationsnetz mit allein vier Negatoren ist eine minimale Verbundkontextur CT mit erheblicher Speicher- und Rechenkapazität.

Der Rechner arbeitet mit einer Negativsprache. In dieser Sprache werden Wörter gebildet. Ein Wort in der Negativsprache bedeutet das Ausführen einer Negationsfolge NF gemäß des mehrwertig arbeitenden Negationssystems der zugrundegelegten mehrwertigen Logik, wobei diese Negationsfolge NF durch eine Folge von einzelnen Negatoren bestimmt ist. Die Wörter entsprechend jeweils einer Negationsfolge können nur auf dem Negationsnetz gebildet werden. Da das Negationssystem für $n \geq 4$ ein vernetztes System von Kreisen bildet, sind auch zyklische, z. B. biologische Prozesse durch Wörter beschreibbar.

Ein Weg kann innerhalb des Negationsnetzes aus Knotenrechnern und Informationsleitungen ein Weg, ein Kreisweg

oder auch ein Netzwerk, maximal das gesamte zur Verfügung stehende Negationsnetzwerk sein. Ein Beispiel ist in Fig. 1 der Kreisweg (3) (27) (51) (53) (29) (5) (3), der von dem Knotenrechner 3 ausgeht und die Negationsfolge $N_1$ $N_2$ $N_4$ $N_2$ $N_1$ $N_4$ zeigt.

Träger von Informationen ist wiederum das durch die mehrwertige Logik gebildete Negationsnetz. Statt auf ein Binärmuster, wie bei klassischen Rechnern, zurückzugreifen, wird bei dem Rechner gemäß der Erfindung der Informationsgehalt eines Wortes durch das Durchlaufen einer Negationsfolge im Negationsnetz bestimmt. Damit werden z. B. allein bei einem 4-wertigen System mit einer Linien-Kontextur, das ein Negationsnetz mit 24 Knoten bildet, 3750 Kreisworte darstellbar; vgl. hierzu die Tabelle in der DE-OS 34 29 078. Ein derartiges 4-wertiges System mit 24 Knotenrechnern ist in der Fig. 2 dargestellt, wobei wiederum die Negatoren nur durch die Indices gekennzeichnet sind. Das Netzwerk besteht aus vier Schichten; die Linien-Kontextur der vier Werte [1] [2] [3] [4] ist rechts neben dem 4-Schichten-Permutographen dargestellt.

Bei einem 5-wertigen System, entsprechend einem 5-schichtigen Permutographen gemäß Fig. 1 gibt es eine Minimalabschätzung der Anzahl von Größtkreisen, die bei etwa $10^8$ liegt. Rechnet man die Möglichkeiten, Wege und Netzwerke zu bilden ein, so ergibt sich eine Kapazität des Datenspeichers von bisher unvorstellbarer Größe bei gleichzeitig vergleichsweise minimalem Raumbedarf.

Insgesamt kann ein äußerst kompakt gebauter Rechner bereitgestellt werden, dessen Architektur von einem dreidimensionalen Schichten-Permutographen bestimmt wird.

Mathematisch kann bewiesen werden, daß in einem n-wertigen Permutographen jeder Knoten von jedem anderen Knoten aus in längstens

$$\binom{n}{m} = \frac{n!}{m!\,(n-m)!} = \binom{n}{n-m}$$

Schritten erreicht werden kann. In einem 7-wertigen Permutographen mit Linien-Kontextur, der ein aus 7! = 5040 Knoten bestehendes Netzwerk ist, ist die längste der kürzesten Entfernungen zwischen zwei der 5040 Knoten nur

$$\binom{7}{2} = 21$$

Negationsschritte. Dies bedeutet, daß trotz immenser Datenspeicherkapazität äußerst kurze Rechenzeiten möglich sind.

Der angegebene intentionale Rechner gemäß der Erfindung bzw. dessen Logik- und Rechensystem, kann mathematisch als Permutograph aufgefasst werden, dessen Knoten jeweils wiederum als Permutograph aufgebaut sind. Hierdurch ist eine selbstbezügliche Steuerung des Rechners möglich. Die einzelnen Knotenrechner werden von außen angesteuert, z. B. über ein Eingabegerät, werden jedoch auch durch andere Knotenrechner und Subknotenrechner intern gesteuert.

Die Erfindung ist in einem Ausführungsbeispiel anhand der Zeichnung näher erläutert. In der Zeichnung stellen dar:

Fig. 1 und 2 bereits erwähnte schematische Darstellungen eines 5-wertigen bzw. 4-wertigen, in 5 bzw. 4 Schichten aufgebauten Permutographen;

Fig. 3 ein schematisches Blockschaltbild eines

gemäß der Erfindung aufgebauten Rechners;

Fig. 4 ein Blockschaltbild eines in dem Logik- und Rechensystem des Gesamtrechners verwendeten Knotenrechners;

Fig. 5 ein Detailschaltbild eines Knotenrechners mit einem Kontexturrechner, einem Wegprozessor und einer Subknoteneinheit;

Fig. 6 ein Blockdiagramm des Wegprozessors;

Fig. 7 ein Blockdiagramm der Subknoteneinheit.

Ein Gesamtrechner gemäß Fig. 1 weist eine Eingabeeinheit 1, ein zentrales Logik/Rechensystem 2 und eine Ausgabeeinheit 3 auf. In der Eingabeeinheit werden die dem Rechner zugeführten Daten aufbereitet und in ein Peripheriegerät 6 überführt, wo sie über eine Datenleitung 7 in das zentrale Logik/Rechensystem 2 eingegeben werden. Zwischen der Steuer- und Kontrolleinheit 4 und dem zentralen Logik/Rechensystem 2 ist eine Vielzahl von bidirektionalen Datenleitungen vorgesehen, die hier insgesamt mit 8 bezeichnet sind. Über diese Datenleitungen laufen Takt- oder andere Steuerimpulse von der Steuer- und Kontrolleinheit 4 zum zentralen Logik/Rechensystem 2 und Rückmeldungen von dem zentralen Logik/Rechensystem 2 zur Steuer- und Kontrolleinheit 4. Die Ausgangsdaten des zentralen Logik/Rechensystems 2 werden über eine Datenleitung 9 der Ausgabeeinheit 3 zugeführt. Über eine bidirektionale Datenleitung 1o zu dem Logik/Rechensystem 2 und der Steuer- und Kontrolleinheit 5 und eine bidirektionale Datenleitung 11 zwischen den beiden Steuer- und Kontrolleinheiten 4 und 5 werden für den Betrieb des Gesamtrechners notwendige Funktionsdaten ausgetauscht.

Das zentrale Logik/Rechensystem 2 ist als n-wertiger Permutograph aufgebaut. Der Einfachheit halber sei von einem

4-wertigen Permutographen entsprechend Fig. 2 mit vier Schichten ausgegangen. Das Logik/Rechensystem 2 besteht demnach aus 24 Knotenrechnern 21, die in Fig. 2 durch die Kreise dargestellt sind. Die Knotenrechner 21 sind untereinander entsprechend dem oben angegebenen Schema durch Informationsleitungen 22 miteinander verbunden. Diese Informationsleitungen sind bidirektionale Datenleitungen, dienen demnach als Eingangs- und Ausgangsleitungen, die gemäß Fig. 4 in zwei Leitungen 22i für die Eingangsleitungen und 22o für die Ausgangsleitungen aufgeteilt sind.

Jeder Knotenrechner 21 weist eine Eingangseinheit 23 mit Rechnersteuerung auf, dem über die Dateleitung 7 von der Eingabeeinheit und über die Datenleitung 22i von anderen Knotenrechnern Daten eingegeben werden. Über die Leitung 8 werden die erwähnten Takt- und Steuersignale zugeführt. Die Eingangseinheit 23 ist mit einem Kontexturrechner 24, einem Wegprozessor 25, einer Subknoteneinheit 26 und einer fest programmierten Algorithmuseinheit 27 verbunden.

Die 24 in vier Schichten angeordneten Knotenrechner 21 des Logik/Rechensystems 2 bilden das Rechnerskelett. In jeder der vier Schichten befinden sich 6 Knoten. Jede Schicht ist so organisiert, daß sie genau einen der vier Werte bzw. Urqualitäten konstant hält. Jeder Knotenrechner ist ein als Modul gebauter Chip. Dieses Modul ist ein für spezielle Zwecke gebauter Rechner, der die Vernetzungsstruktur des Gesamtrechners in der Subknoteneinheit 26 ebenfalls enthält. In jedem der 24 Knotenrechner 21 sind in der Algorhythmuseinheit 27 spezielle Algorhythmen hardwaremäßig oder auch softwaremäßig untergebracht, die das Individuelle eines jeden Knotenrechners ausmachen. Die Vernetzung der 24 Permutationen sowohl im Gesamtrechner als auch in jedem Knotenrechner 21 zum Negationsnetz gemäß Fig. 2, d. h. zum Logik/

Rechensystem 2 wird durch die Urladung eines als Urzelle zu bezeichnenden Knotenrechners hergestellt, wie weiter unten erläutert. Da jeder Chip eines jeden Knotenrechners, abgesehen von den speziellen in der Einheit 27 gespeicherten Algorithmen gleich gebaut ist, kann im Prinzip jeder Knorenrechner zur Urzelle werden und für spezielle Aufgaben vorübergehend die Befehlssteuerung des Gesamtrechners übernehmen, d. h. es herrscht eine Redundanz der potentiellen Befehlsgewalt. Jedem der 24 Knoten wird eine Eigen-Permutation $P_E$ =

$$p_1^e, p_2^e, p_3^e, p_4^e$$

zugeordnet. Ein Teil der insgesamt 24 Permutationen ist in Fig. 2 aufgelistet. Diese Eigenpermutation dient als Adresse eines bestimmten Knotenrechners. So ist die Adresse des in Fig. 2 mit (1) gezeigten Knotenrechners (1, 2, 3,4) des in Fig. 2 mit (8) dargestellten Knotenrechners (2, 1, 4, 3).

Der Kontexturrechner 24 weist als wesentlichen Bestandteil eine n-plätzige Speicherzelle 28 auf, demnach in diesen Fällen mit vier Plätzen, denen jeweils einer der n Werte zugeordnet ist. Dies ist hier angedeutet durch die Blöcke [1] [2] [3] [4] . Die vier Speicherplätze sind über eine steuerbare Austauschleitung 29 miteinander verbunden, über die die zulässigen Umtaschrelationen zwischen den Werten 1, 2, 3, 4 gebildet werden. Die einzelnen Umtauschleitungen 29 können ein- oder ausgeschaltet werden. Von jedem Speicherplatz führt eine Ausgangsleitung 30 zu einer Ausgangssteuerung 31, in der dann die erwähnten Umtauschrelationen endgültig gebildet werden. Hiermit ist jede Kontextur darstellbar, auch solche Kontexturen, die logisch nicht zusammenhängen.

Von der Ausgangssteuerung 21 führen drei Negationsleitungen 32 fort, auf denen die oben erwähnten Negatoren $N_1$, $N_2$ und $N_3$ darstellbar sind. In den Negationsleitungen 32 sind jeweils ein Schwellenwertanzeiger 33 und ein von diesem gesteuerter Leitungsschalter 34 vorgesehen. Ist ein Leitungsschalter geschlossen, so können zu einem weiteren Knotenrechner, zu dem die zugehörige Ausgangsleitung 32 führt, Informationen, z. B. Permutationen oder Negatorenfolgen weitergeleitet werden. Ist der Leitungsschalter geöffnet, so können über die zugehörige Ausgangsleitung dementsprechend keine Informationen weitergeleitet werden. Der Zustand des Leitungsschalters hängt von dem Schwellenwertanzeiger ab. Diese Schwellenwertanzeiger zeigen Schwellenwerte für die in diesem Falle drei Verbindungsleitungen des Knotenrechners zu anderen Knotenrechnern an. Die Schwellenwertanzeiger 33 sind Schrittzähler, die Schritte einer Negationsfolge NF modulo $\binom{n}{2}$ zählen. In dem Augenblick, in dem über eine Negationsleitung 32 eine Information geschickt wird, bedeutet dies, daß die Negation $N_1$, $N_2$ bzw. $N_3$ einer bestimmten Negationsfolge ausgeführt wurde. Der entsprechende Leitungsschalter 34 wird anschließend auf "Aus" gestellt. Außerdem wird der zugehörige Schwellenwertanzeiger 33 auf "1" gesetzt. Der Schwellenwertanzeiger zählt dann im Takt der im Gesamtrechner ablaufenden Negationsfolge ganzzahlig weiter. Ein Takt im Gesamtsystem ist unabhängig von der physikalisch ablaufenden Zeit. Er hängt nur vom Ausgeführtsein einer Negation ab. Zur Kenntlichmachung wird nach Ende einer Negation dieser Takt über die Leitungen 8 rückgemeldet; da jedes Ziel in längstens $\binom{n}{2}$ Schritten erreicht wird, genügt es, daß die Schrittzähler in den Schwellenwertanzeigern 33 bis $\binom{n}{2}$ zählen können, d. h. bei dem hier vereinfacht dargestellten 4-wertigen Logiksystem bis 6. Der Schrittzähler bleibt beim Erreichen des Zieles auf der dafür benötigen Schrittanzahl stehen, und zwar solange,

bis er bei erneuter Aktivierung wieder mit "1" beginnt.

In den jeweiligen Zustand der Negationsleitungen greift der Wegprozessor 25 ein. Dieser Wegprozessor 25 weist einen Schrittspeicher 35 auf, der den Algorithmus des jeweils kürzesten Weges für bestimmte Prozesse innerhalb des Rechners enthält. Dieser Algorithmus kann hardwaremäßig geschaltet sein oder jeweils berechnet werden. Außerdem ist ein Zielspeicher 36 vorgesehen, in dem ein n-stelliger Vektor $P_z = \{P_1^z, P_2^z, P_3^z, P_4^z\}$ gespeichert ist, d. h. eine Zielpermutation für zielsuchende Prozesse. Außerdem ist noch ein Weglängenzähler 37 vorgesehen, der die Anzahl der für die kürzesten Wege zwischen dem jeweiligen Knotenrechner und dem als Ziel anzusteuernden Knotenrechner benötigten Schritte angibt. Die Anzahl der Schritte ist in jedem Falle kleiner oder gleich n!, in diesem Falle kleiner oder gleich 24.

Mit diesen drei Blöcken 35, 36 und 37 kommuniziert ein Negationsfolgerechner 38, in dem diejenigen Negationsleitungen 32 mit den zugehörigen Negatoren errechnet werden, die für das Erreichen des Zieles nötig sind. Das Ausgangssignal des Negationsfolgerechners 38 wird einer Leitungsschalteransteuerung 39 mitgeteilt, die über eine bidirektionale Datenleitung 40 die entsprechenden Leitungsschalter 34 schließt. In bestimmten Fällen ist es möglich, daß ein Ziel auf mehreren Wegen erreicht werden kann, so daß der Negationsrechner entsprechend mehrere Möglichkeiten angibt, welche der Negationsleitungen aktiviert werden soll. Um hier eine eindeutige Auswahl zu treffen, wird über die bidirektionale Datenleitung 40 dem Wegprozessor 25 der jeweilige Zählerstand der einzelnen Schrittzähler in den Schwellenwertanzeigern 33 mitgeteilt. Diese einzelnen Zählerstände werden in einem Maximumzähler 41 gespeichert,

dessen Ausgangssignal ebenfalls mit der Leitungsschalteransteuerung 39 verbunden ist. Dementsprechend wird im Falle mehrerer Möglichkeiten diejenige Negationsleitung aktiviert, in der der Schrittzähler mit dem höchsten Zählerstand liegt und dessen Leitungsschalter 34 sich auf "Ein" stellen läßt. Der Schrittspeicher 35 mit dem gespeicherten oder berechneten Algorithmus für den kürzesten Weg greift dabei auf den Maximumzähler 41 zu.

Im Wegprozessor 25 ist noch eine Vergleichsschaltung 42 vorgesehen, in der festgestellt wird, ob das Ziel bereits erreicht ist. Dies erfolgt durch einen Vergleich der als Adresse dienenden Eigenpermutation und der mitgeteilten Zielpermutation. Unabhängig davon wird auch im Weglängenzähler 37 festgestellt, ob das Ziel erreicht, bzw. eine vorgegebene Negationsfolge durchlaufen oder die Übertragung einer Negationsfolge vollständig ist. Entsprechende Rückmeldungen werden über die Datenleitungen 8 weitergegeben.

Bei Störungen wird ein Ziel gegebenenfalls durch Umwege erreicht. In diesem Falle überschreitet der Weglängenzähler 37 des jeweiligen Knotenrechners vor dem Ziel natürlich die berechnete Minimallänge oder die vorgegebene ursprüngliche Länge. Das Erkennen einer Störung und das Erreichen des Zieles auf Umwegen ist möglich durch die in jedem Knotenrechner angelegte Subknoteneinheit 26, die wiederum ein Abbild des Gesamtrechners, demnach ein n-wertiger, d. h. in diesem Falle ein 4-wertiger Permutograph ist. Die Subknoteneinheit 26 weist demnach ein zentrales Logik/Rechensystem 43 auf, das aus 24 Subknoten 44 besteht, die miteinander verbunden sind. Die Art der Verbindung der einzelnen Subknoten wird in einem Vernetzungsstrukturrechner 45 festgelegt, die jeweilige Vernetzung wird durch eine Vernetzungssteuerung 46 aktiviert. Die Subknoteneinheit 26

kann in den Wegprozessor oder auch direkt in die Negationsleitungen 32 eingreifen. Hierzu ist in den Negationsleitungen 32 eines jeden Knotenrechners ein Negationsschalter 47 vorgesehen, der über eine bidirektionale Datenleitung 48 mit der Subknoteneinheit 26 kommuniziert (Fig. 5).

Da jeder Knotenrechner ebenfalls in der Subknoteneinheit 26 das Gesamtrechnernetz enthält, besteht bei Bedarf die Möglichkeit, daß ein bestimmter Knotenrechner - und das kann im Prinzip jeder Knotenrechner sein - Kontrollfunktionen übernehmen kann und selbst mitrechnet. Der Knotenrechner dient in diesem Falle als Referenzrechner.

In der in jedem Knotenrechner noch vorhandenen Algorhythmuseinheit 27 sind weitere Algorithmen gespeichert oder werden bedarfsweise errechnet, so z. B. der Algorithmus "Kontrolliere alle Knotenrechner auf Funktionsfähigkeit und melde das dem Anfangsknotenrechner zurück" oder "Durchlaufe sämtliche n! Knotenrechner ohne Rückkehr". Diese Algorhythmen erzeugen bestimmte negativsprachliche Wörter, d. h. Negationsfolgen. Diese errechneten bzw. fest gespeicherten Negationsfolgen werden über die Negationsleitungen 32 an die bestimmten Knotenrechner geschickt. Da ein Knotenrechner jeweils wissen muß, ob es sich bei der eingehenden Information um eine Permutation P oder um eine Negationsfolge handelt, geht jeder Permutation stets ein von den n Werten verschiedenes Indikatorzeichen voraus.

Das dreidimensionale Permutographenskelett eines n-wertigen Permutographen muß selbstverständlich berechnet werden. Aus der mathematischen Theorie für Permutographen ergibt sich, daß ein Permutograph für ein n-wertiges System in einem (n-1)-dimensionalen Raum seine größte Symmetrie sowie kürzeste Verbindungen zwischen allen Knotenrechnern enthält.

Für eine technische Realisation im dreidimensionalen Raum ist aus den bekannten topologischen Zusammenhängen eines Permutographen eine Projektion in den dreidimensionalen Raum algorithmisch zu errechnen. Als Projektion ergeben sich nun selbstverständlich verschieden lange Verbindungen zwischen den einzelnen Knotenrechnern. Genau diese Eigenschaften werden auch im Netzwerk der Formatio reticularis beobachtet. Dies bedeutet, daß durch eine geschickte Organisation die Mehrdimensionalität in Dreidimensionalität übersetzt wird.

Ein solcher Algorithmus ist vorerst nur für Permutographen mit Linienkontextur bekannt. Dies führt, wie oben erwähnt, zu einer Anordnung der Knotenrechner in einzelnen Schichten. Bei Linienpermutographen entspricht der ersten bzw. der letzten Schicht, d. h. den Randschichten, wiederum ein vollständiger Linienpermutograph der Ordnung (n-1). Hat man eine Anordnung von Knoten für eine der Randschichten gefunden, so ist dies zugleich die räumliche Anordnung für die Knoten der übrigen Schichten. Das geht aus den Figuren 1 und 2 deutlich hervor, in denen die in den Kreisen angegebenen Nummern der Knotenrechner einer Schicht jeweils um 24 bzw. 6 größer sind als in der vorhergehenden Schicht. Die komplexeste Ordnung weisen die Randschichten auf. Die Zwischenschichten haben Subsystem-Ordnungen der Randschichten.

Um die Anordnung der Knotenrechner der für den Gesamtbau entscheidenden Anordnung zu finden, wird rekursiv auf Permutographen niedrigerer Ordnung zurückgegriffen, bis man auf Permutographen mit bekannter dreidimensionaler Projektion stößt. Für ein 5-wertiges System liegt ein dreidimensionales Modell als Projektion aus dem vierdimensionalen Raum bereits vor.

Die endgültige Vernetzung der einzelnen Knotenrechner und der Subknoteneinheit erfolgt folgendermaßen:
Ein beliebiger, noch "leerer" Knotenrechner wird als Urzelle herausgegriffen. Ohne Beschränkung der Allgemeinheit sei dies der Knotenrechner mit der lexikographischen Ordnungsnummer (1). In diese Urzelle wird über eine entsprechende Lese-Schreibvorrichtung die Eigenpermutation des Knotenrechners geschrieben, im Falle eines einfachen Rechners entsprechend Fig. 2 die Permutation (1, 2, 3, 4). Damit wird dem entstehenden Knotenrechner und auch dem Gesamtrechner die Wertigkeit mitgeteilt. In der Regel wird die Wertigkeit der konzipierten Wertigkeit des Gesamtsystemes entsprechen, sie kann jedoch auch niedriger sein. Als nächstes werden dem Kontexturrechner 24 mit der n-plätzigen Kontexturzelle die zulässigen Umtauschverhältnisse, d. h. die Negatoren eingegeben. Im hier behandelten vierwertigen System sind das die Negatoren $N_1$, $N_2$ und $N_3$, die jeweils die Werte 1 und 2, 2 und 3 bzw. 3 und 4 umtauschen. Da in dem Kontexturrechner $\binom{n}{2}$ Verbundleitungen existieren, die jeden der n Werte mit jedem anderen verbinden können, werden nun die angegebenen Umtauschverhältnisse durch Einschalten der entsprechenden Verbundleitungen realisiert und damit die zulässigen Negatoren definiert.

Da jedem Knotenrechner der Algorithmus "kürzester Weg" im Schrittspeicher 35 eingebaut ist, können auch die lexikographischen Ordnungsnummern von Zielpermutationen berechnet werden, die dann im Zielspeicher 36 abgelegt werden. In aufeinanderfolgenden Schritten wird von dem als Urzelle dienenden Knotenrechner aus der n-stellige Vektor $P_E$ über Parallelschaltung in den Vektor $P_{Ziel}$ kopiert. Dann wird in dem Vektor $P_{Ziel}$ gemäß der vorliegenden Linienkontextur der Negator $N_i$ im Schritt i angewandt, d. h. zwei Werte der ursprünglichen, die Adresse darstellenden

Permutation $P_E$ werden umgetauscht oder transponiert. Von der auf dem Adressenvektor angewandten Permutation wird die lexikographische Ordnungsnummer vom eingebauten Algorithmus "kürzester Weg" bestimmt. Aufgrund dieser Berechnung wird von dem als Urzelle dienenden Knotenrechner zu (n-1) weiteren Knotenrechnern eine Verbindungsleitung entsprechend den Negationsleitungen 32 hergestellt. Die Anzahl der Negationsleitungen folgt aus den auf den Adressenvektor angewandten Permutationen.

Der Reihe nach werden nun die (n-1) mit dem als Urzelle dienenden Knotenrechner verbundenen weiteren Knotenrechner der gleichen Prozedur unterworfen. Damit entstehen weitere Verbindungen zu weiteren Knotenrechnern. Der hier beschriebene Prozess wird solange wiederholt, bis alle n! Knotenrechner vernetzt sind. Dies ist nach $\binom{n}{2}$ derartigen Prozeduren beendet. Die angegebene Vernetzungsprozedur wird selbstverständlich auch in der Subknoteneinheit 26 vorgenommen.

Schließlich ist das Gesamtsystem mit einer für alle Knotenrechner gleichen vorgegebenen Kontextur versehen. Der Gesamtpermutograph, der sowohl der Logik, der Eigenorganisation, der Ontogenese für die Reproduktion weiterer Rechner gleicher Bauart dienen kann, als auch die Speicherstruktur bestimmt, ist jetzt vernetzt.

Bislang ist ein Gesamtrechner beschrieben worden, bei dem die Knotenrechner untereinander durch (n-1) Negationsleitungen verbunden sind. Es ist jedoch auch möglich , einen Rechner zu konstruieren, bei dem diese Anzahl der Negationsleitungen erhöht ist. Dies ist in Fig. 3 durch eine gestrichelt dargestellte zusätzliche Verknüpfungsschaltung 49 möglich. In diesem Falle ist jeder Knotenrechner über

$\binom{n}{2}$ Leitungen mit anderen Knotenrechnern verknüpfbar. Diese $\binom{n}{2}$ zusätzlichen Verbindungsleitungen können "Ein" oder "Aus" geschaltet sein. Damit kann jeder Knotenrechner eine eigene Kontextur haben, die jedoch mit den Kontexturen der anderen Knotenrechner kompatibel sein muß. Außerdem kann damit jede eingestellte Kontextur - auch während des Betriebes - bei Bedarf umgestellt werden, so daß mit variabler Kontextur gearbeitet werden kann. Dazu bedarf es jedoch vorheriger Kompatibilitätsberechnungen, die der Rechner selbst ausführen kann.

Mit einem derart erweiterten Rechner können andere Rechner - auch unterschiedlicher Ordnung bzw. Wertigkeit - mit kleinerer Ordnung oder auch höherer Ordnung geregelt werden. Liegt eine höhere Ordnung des geregelten Rechners vor, können jedoch nur Subsysteme dieses Rechners geregelt werden.

Zur weiteren Erläuterung der intentionalen Funktion des Rechners sei nochmals auf die erwähnte DE-OS 34 29 078 verwiesen.

Gleichgültig ober der beschriebene Rechner z. B.
als Vermittlungsrechner (qualitativ verschiedener Bereiche),
als Steuerungsrechner für Roboter,
als Koordinationsrechner unterschiedlicher herkömmlicher Digitalrechner,
als Simulator komplexer vernetzter Regelkreissysteme,
als Analyserechner für Eigenschaften selbstreferentieller Systeme, oder
als Entwicklungsrechner höher als er selbst entwickelter weiterer transklassischer Rechner
benutzt wird, immer sind die Informationselemente der Vermittlung Wörter der Negativsprache. Die Wörter können Negationsfolgen mit Angabe der Startpermutation sein, falls

jeweils eine Operation im Gesamtsystem zu einem Zeitpunkt abläuft, oder Flüsse in Netzwerken, bei mehreren gleichzeitig stattfindenden Operationen.

Auf diese Wörter wird nicht zugegriffen, sondern sie werden gemäß des Negationsnetzes des zugrundegelegten Permutographen erzeugt. Sollen für irgendwelche Zwecke wichtige bereits erzeugte Wörter ohne Neukonstruktion benutzt werden, weil z. B. der Konstruktionsaufwand höher als der Dokumentationsaufwand ist, so kann ein externes klassisches Speichermedium zur Fixierung des Ablaufens eines bestimmten Wortes angeschlossen werden. Da jeder einzelne Knotenrechner mitrechnet, was im Gesamtsystem passiert, kann im Prinzip auch jeder von ihnen als Ausgabesystem funktionieren.

Verschiedene Ausgabesysteme sind auch nebeneinanderbestehend möglich; das hängt auch von dem Verwendungszweck des Rechners ab:

A. Einfachste Aufgabe: Knotenrechner-Impulse
Jeder Knotenrechner weist sich durch seinen physikalischen Ort mit seiner Eigenpermutation aus und gibt so viel unterscheidbare Signale ab, wie er über Negationsleitungen 22, 32 aktiviert werden kann.

Damit können direkte Steuerungen externer Systeme erreicht werden.
Für komplexere Aufgaben kann ein klassisch arbeitendes, d. h. Binärsequenzen dokumentierendes Speichersystem, die Impulse der Knotenrechner in der Reihenfolge ihres Auftretens sammeln und bis zur Kapazitätsgrenze abspeichern, da es bei dieser Dokumentation nur auf das zweiwertige Prinzip "vorhanden/nicht-vorhanden" ankommt.

B. Netzwerk-Anzeigen

Ein beliebiger Knotenrechner erhält die Aufgabe zugeordnet, die rechnerinternen negativsprachlichen Aktivitäten des Gesamtrechners extern zu vermitteln. Dazu bedarf es einer materiellen, jedoch nur topologisch ähnlichen Kopie des Negationsnetzwerkskeletts. Auf ihm werden alle Informationsflüsse bzw. Berechnungen angezeigt. Dabei kann geregelt werden, wieviel hintereinanderfolgende Operationen angezeigt werden sollen, bevor die zuerst eingetroffenen wieder gelöscht werden. Dies bedeutet eine gleitende Operationsfolge.

Der ausgewählte Knotenrechner kann dieser Aufgabe nachkommen, indem Impuls-Empfänger an seine eigenen Knötchen, in denen die Gesamtrechner-Situation mitgerechnet wird, angeschlossen werden. Diese Ausgabe-Funktion beeinträchtigt nicht seine Funktion als Element des Gesamtrechners. Ein Knotenrechner vermittelt hier die Gesamtsituation. Beim Ausgabesystem A ist es der Gesamtrechner.

C. Subsystem-Ausgabe

Ein beliebiger Knotenrechner kann auch als Anzeiger für Subsystemzusammenhänge, kürzeste Wege, Hamiltonkreise, d. h. Maximalkreise, u. a. dienen. In diesem Falle werden in einer speziellen Ausgabeeinheit - wiederum ein Abbild des Permutographen - permanent die entsprechenden Permutationen und Negatoren für die oben genannten Teilsysteme angezeigt.

Diese über die Ausgabe-Einheiten dargestellten Wörter der Negativsprache können dann z. B. differenzierte Befehle für angeschlossene Roboter darstellen oder auch Reihenfolgen angeben, nach denen mehrere Roboter zusammenarbeiten müssen, um ein gemeinsam zu bearbeitendes Produkt herzustellen.

Da der Rechner so konzipiert ist daß für Rechenvorgänge sich selbststeuernde Takte unterschiedlich langer physikalischer Zeitdauer entstehen, ist das Problem minimaler Zeitdauern bzw. Rechenzeiten nicht nur von Leitungslängen abhängig, sondern stets ein Raum-Zeit-Problem, das wiederum vom Entstehungsprozess selbst abhängig ist.

Sollten für irgendwelche Steuerungsvorgänge nicht nur minimale Schrittfolgen notwendig sein, sondern der Weg auch noch über möglichst viele kürzeste Leitungen erfolgen, so kann der Wegprozessor 25 auch solche Wege in erheblich kürzerer Zeit berechnen, als dies in allgemeinen Graphen mit den besten Algorithmen für das sogenannte "Problem des Handlungsreisenden" möglich wäre. Die Schnelligkeit des Wegprozessors ergibt sich einerseits aus der einzigartigen Organisation des Rechnernetzes und andererseits aus der Tatsache, daß in Permutographen im Prinzip sämtliche kürzesten Wege aus der Kenntnis eines einzigen über einfache negativsprachliche Operationen gewonnen werden können. Derartige kürzeste Wege mit einer maximalen Anzahl von minimalen Leitungslängen können auch in einem herkömmlichen Speicher gespeichert werden.

Gerhard G. Thomas
D-1000 Berlin

Dr. Bernhard Mitterauer
A-5071 Wals bei Salzburg

# Rechner

## Patentansprüche

1. Rechner, insbesondere zur Simulation biologischer Prozesse mit einem Rechnereingabesystem, einem Logik/Rechensystem und einem Rechner-Ausgabesystem, g e k e n n z e i c h n e t durch folgende Merkmale: Das Logik/Rechensystem (2) ist als Negationsnetz nach Art eines n-wertigen Permutographen aufgebaut, dessen Knoten durch n! modulartige Knotenrechner (21) und dessen Kanten durch Informationsleitungen (22, 32) gebildet sind; jeder Knotenrechner (21) weist eine Eingangseinheit (23) mit einer Rechnersteuerung, einen Kontexturrechner (24), einen Wegprozessor (25) und eine Subknoteneinheit (26) auf; jedem Knotenrechner (21) ist eine Adresse entsprechend einer Permutation der n Werte zugeordnet; von jedem Knotenrechner (21) gehen Informationsleitungen (22, 32) aus, die jeweils zu einem anderen Knotenrechner führen, dessen Adresse mit Hilfe eines als Negator

bezeichneten Umtauschoperators ($N_i$) entsprechend einer Vertauschung zweier Werte der Ursprungsadresse gewonnen wird, so daß jede Informationsleitung (22, 32) einem bestimmten Negator zugeordnet ist;
der über die Eingangseinheit (23) ansteuerbare Kontexturrechner (24) weist eine Speicherzelle (28) mit n Speicherstellen für die Werte (1) bis (n) auf, wobei jede Speicherstelle mit allen anderen verbunden ist, und berechnet aus den Eingangsdaten ein Kontextursignal entsprechend einem Negator ($N_i$), das an folgende Knotenrechner (21) sowie die eigene Subknoteneinheit (26) über die zugeordneten Informationsleitungen (22, 32) abgegeben wird;
in den rechnerinternen Teilen der Informationsleitungen (32) ist jeweils ein Leitungsschalter (34) vorgesehen, der von einem als Schrittzähler ausgebildeten Schwellenwertschalter (33) mit einem modulo-$\binom{n}{2}$-Ausgang sowie von dem Wegprozessor (25) aktivierbar ist;
der über die Eingangseinheit (23) mit der Rechnersteuerung ansteuerbare Wegprozessor (25) weist einen Weglängenrechner bzw. Schrittspeicher (35) zur Berechnung bzw. Speicherung der geringsten Schrittanzahl bis zum Zielknotenrechner sowie einen Weglängenzähler (37) auf, ferner einen Negationsfolgerechner (38) zur Berechnung der für das Erreichen des Zielknotenrechners nötigen Informationsleitungen (22, 32) und eine von dem Negationsfolgerechner (38) beaufschlagte Leitungsschalteransteuerung zum Aktivieren der dem errechneten Negator ($N_i$) zugeordneten Informationsleitung (22, 32);
die Subknoteneinheit (26) ist aus n! Subknoten (44) aufgebaut, die als ansteuerbare Module ausgebildet sind, denen wie im Gesamtrechner jeweils eine Permutation der n Werte als Kennung zugewiesen ist und die entsprechend der Vernetzungsstruktur des Gesamtrechners

nach Art eines Permutographen untereinander verbunden sind.

2. Rechner nach Anspruch 1, dadurch gekennzeichnet, daß von jedem Knotenrechner (21) (n-1) Informationsleitungen (22, 32) nur zu solchen anderen Knotenrechnern ausgehen, deren Adresse mit Hilfe eines Negators ($N_i$) durch Vertauschen zweier zahlenmäßig aufeinanderfolgender Werte gewonnen wird.

3. Rechner nach Anspruch 1 oder 2, dadurch gekennzeichnet, daß die n! Knotenrechner (21) in n Schichten zu jeweils (n-1) Knotenrechnern angeordnet sind, wobei in jeder Schicht innerhalb der Adressen der Knotenrechner jeweils der erste Wert (1, 2, ... n) konstant ist, und daß die Schichten entsprechend einer aufsteigenden Folge der ersten Werte angeordnet sind.

4. Rechner nach einem der vorhergehenden Ansprüche, dadurch gekennzeichnet, daß der Wegprozessor (25) eines jeden Knotenrechners (21) einen Maximumzähler (41) aufweist, der mit den Schrittzählern der Schwellenwertanzeiger (33) in den internen Informationsleitungen (32) verbunden ist und jeweils den Schrittzähler mit dem höchsten Zählstand angibt, und daß der Ausgang des Maximumzählers (41) mit der Leitungsschalteransteuerung (39) verbunden ist, die dann, wenn der Negationsfolgerechner (38) mehrere mögliche Negatoren ($N_i$) angibt, diejenige Informationsleitung (32) aktiviert, deren Schrittzähler den höchsten Zählstand aufweist.

5. Rechner nach einem der vorhergehenden Ansprüche, dadurch gekennzeichnet, daß zumindest einige Knotenrechner (21) eine Kontrollprogrammsteuerung (27)

zur Überprüfung der Gesamtfunktion des Rechners aufweisen, in der bestimmte Wege durch alle oder eine Auswahl der Knotenrechner (21) einprogrammiert sind.

6. Rechner nach einem der vorhergehenden Ansprüche, dadurch g e k e n n z e i c h n e t, daß die Knotenrechner (21) mit Hilfe einer zusätzlichen Verknüpfungsschaltung (29) jeweils über insgesamt $\binom{n}{2}$ Informationsleitungen mit anderen Knotenrechnern vernetzbar sind, die mit Hilfe des Kontexturrechners (24) ein- bzw. ausgeschaltet werden.

0 235 764

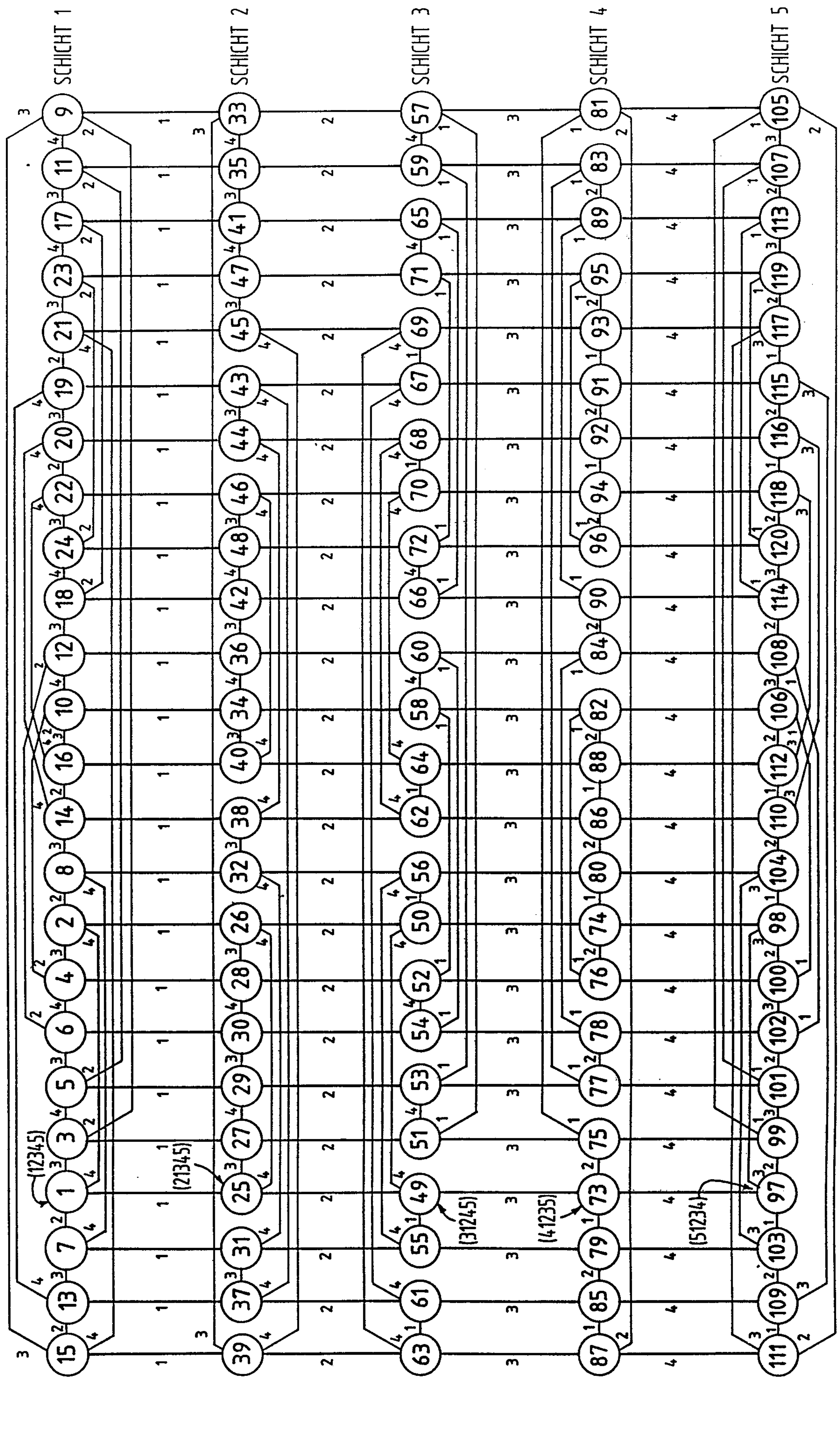


FIG. 1

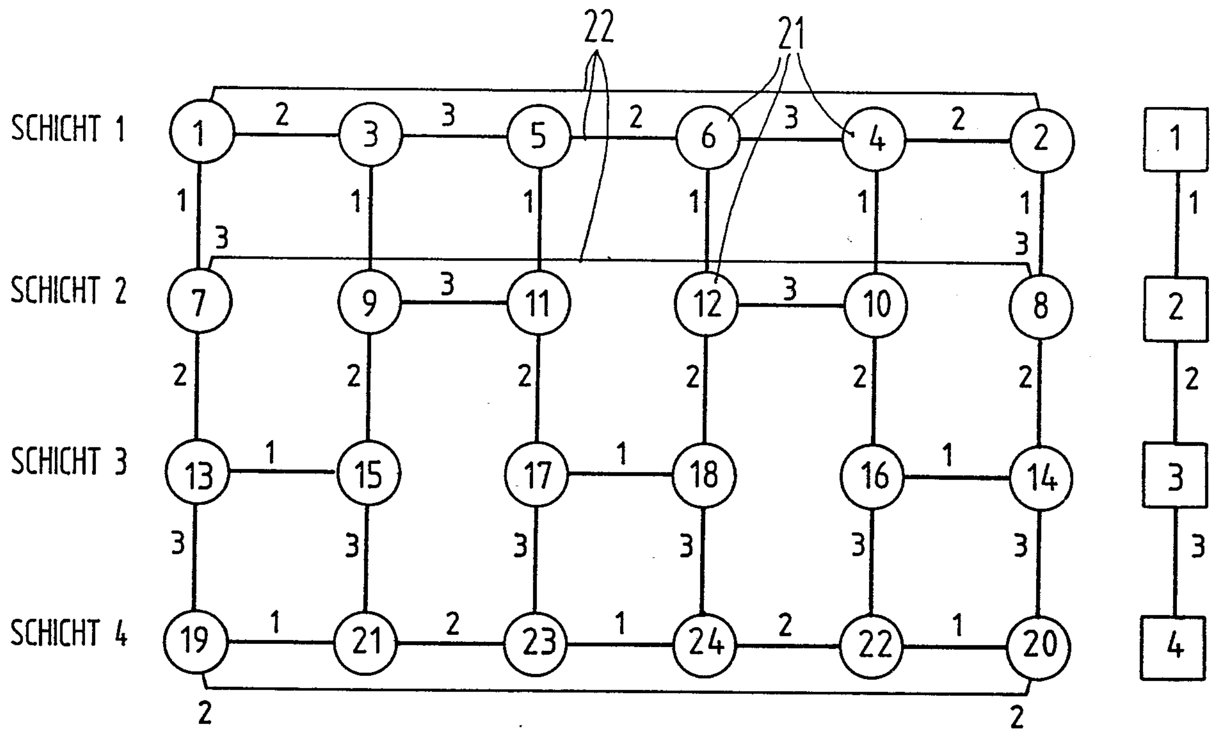


| | |
|---|---|
| (1) | 1234 |
| (2) | 1243 |
| (3) | 1324 |
| (4) | 1342 |
| (5) | 1423 |
| (6) | 1432 |
| (7) | 2134 |
| (8) | 2143 |
| (9) | 2314 |
| ⋮ | ⋮ |
| (24) | 4321 |

(1) (2) ······· (24) KNOTENRECHNER / NUMMER

[1] ··········· [4] KONTEXTURWERT

FIG. 2

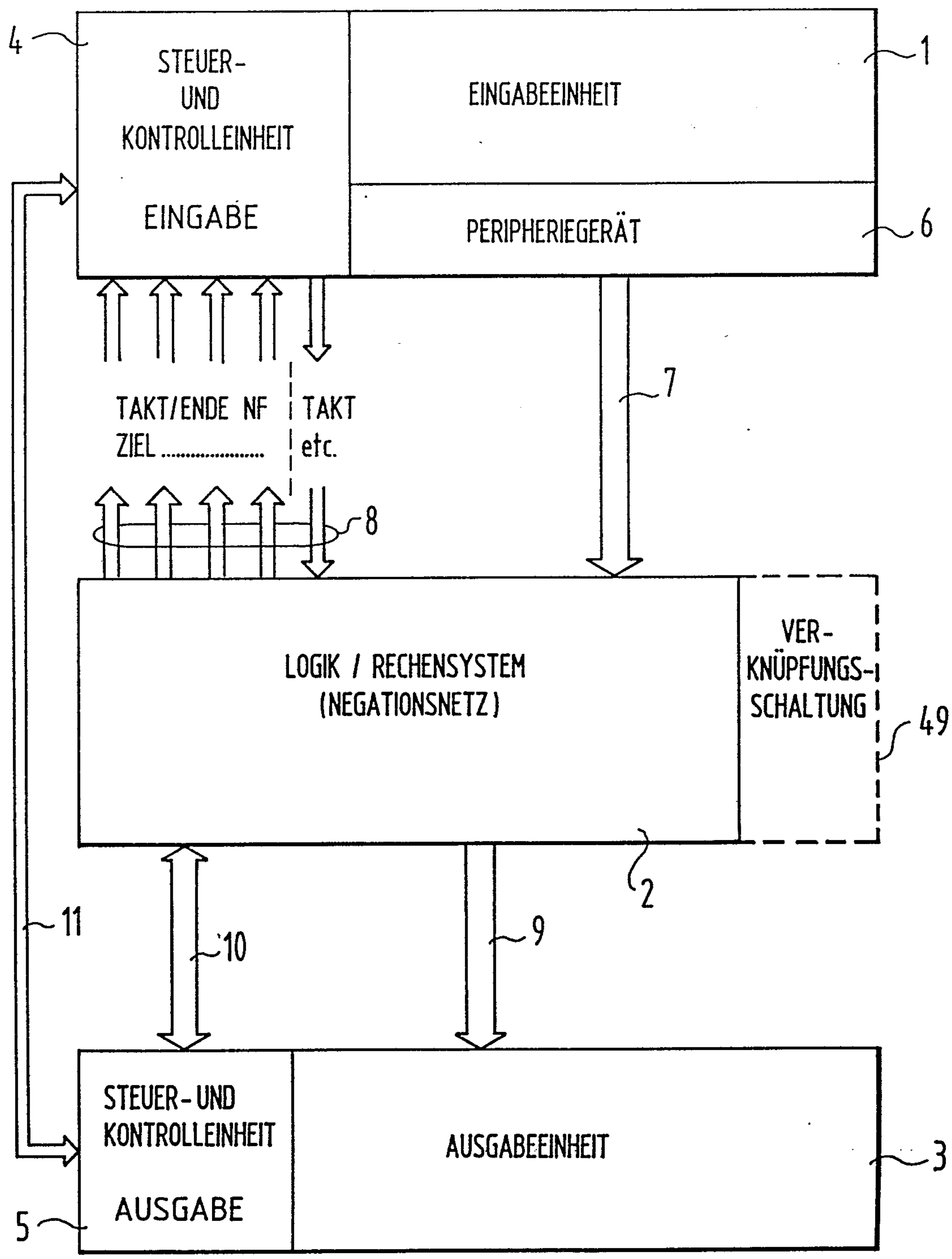
STEUER- UND KONTROLLEINHEIT
EINGABE
EINGABEEINHEIT
PERIPHERIEGERÄT
TAKT/ENDE NF
ZIEL .........
TAKT
etc.
LOGIK / RECHENSYSTEM
(NEGATIONSNETZ)
VER-KNÜPFUNGS-SCHALTUNG
STEUER-UND KONTROLLEINHEIT
AUSGABE
AUSGABEEINHEIT
1
2
3
4
5
6
7
8
9
10
11
49

FIG. 3

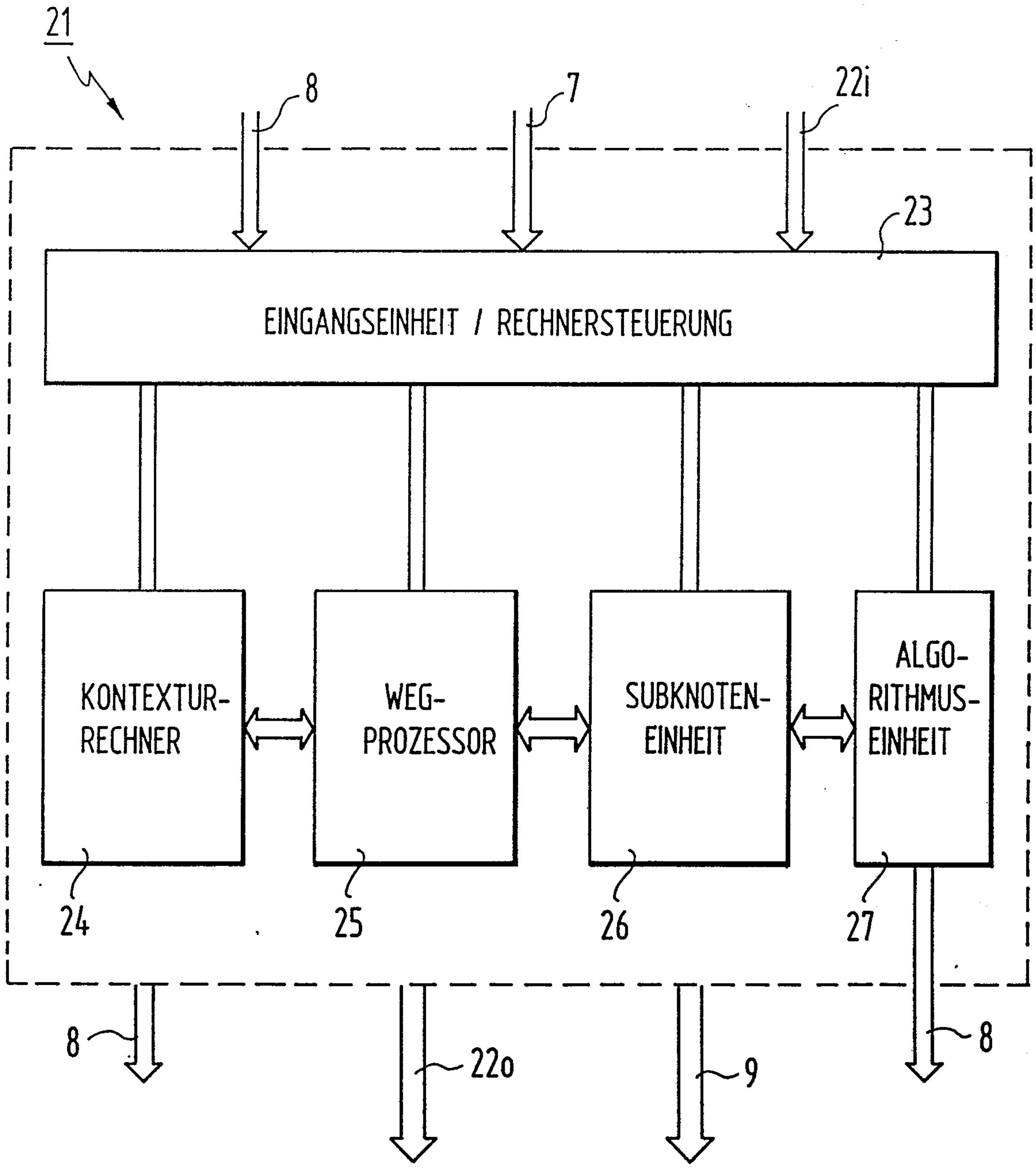
21
8
7
22i
23
EINGANGSEINHEIT / RECHNERSTEUERUNG
KONTEXTUR-
RECHNER
WEG-
PROZESSOR
SUBKNOTEN-
EINHEIT
ALGO-
RITHMUS-
EINHEIT
24
25
26
27
8
22o
9
8

FIG. 4

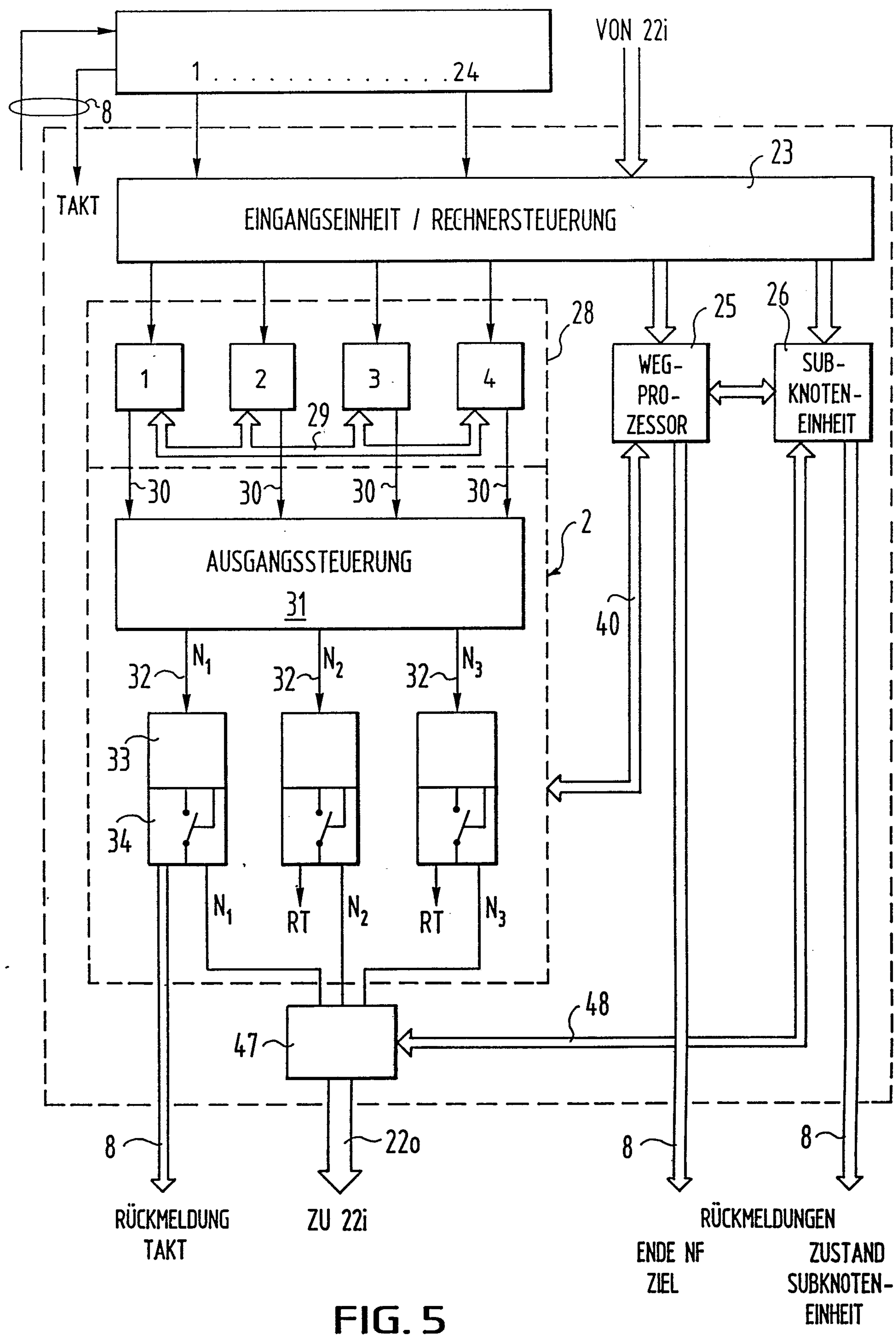

1 . . . . . . . . . . . . . .24
8
TAKT
VON 22i
23
EINGANGSEINHEIT / RECHNERSTEUERUNG
28
25
26
1
2
3
4
WEG-PRO-ZESSOR
SUB-KNOTEN-EINHEIT
29
30
30
30
30
2
AUSGANGSSTEUERUNG
31
40
32
N1
32
N2
32
N3
33
34
N1
RT
N2
RT
N3
48
47
8
22o
8
8
RÜCKMELDUNG TAKT
ZU 22i
RÜCKMELDUNGEN
ENDE NF ZIEL
ZUSTAND SUBKNOTEN-EINHEIT


FIG. 5

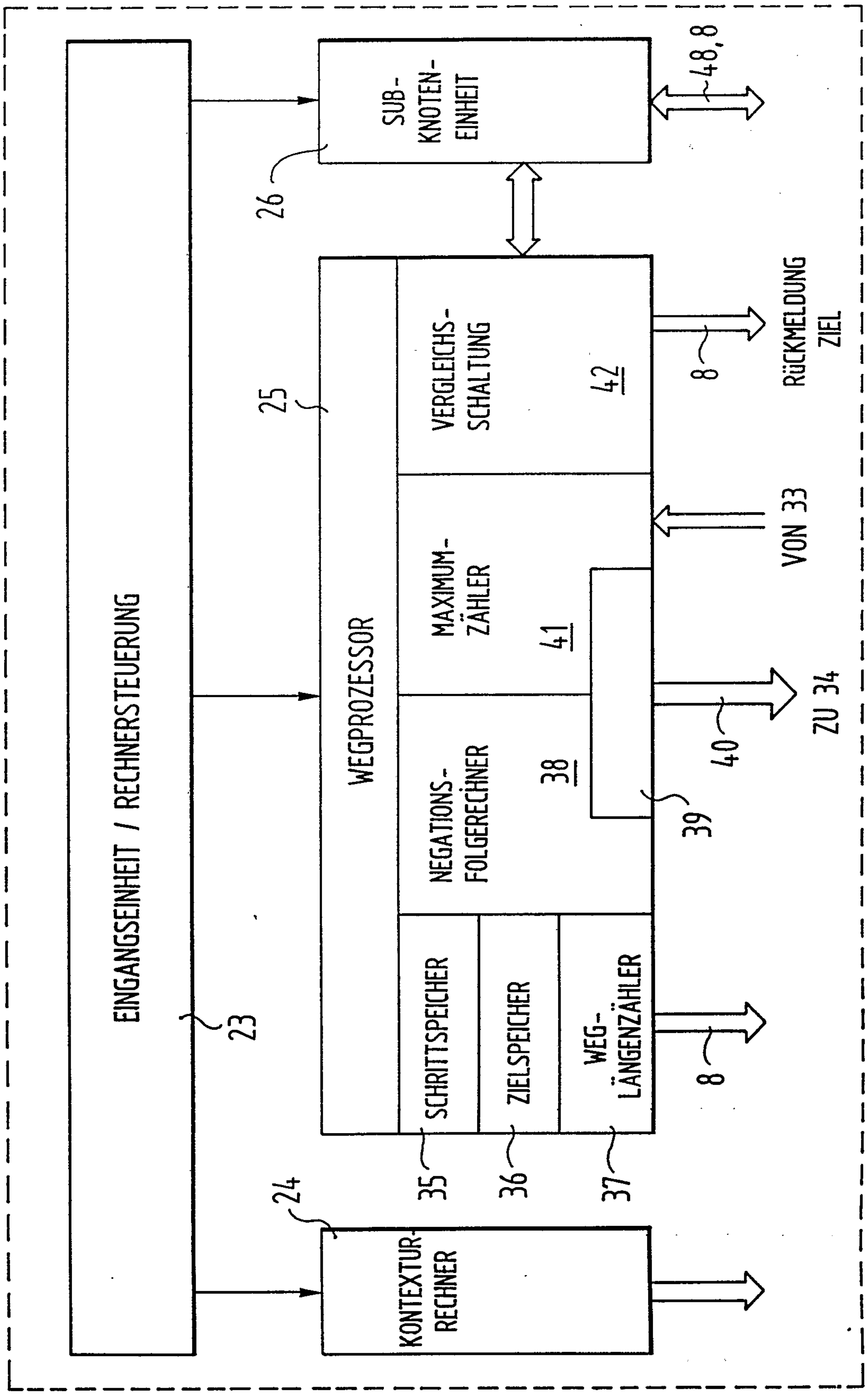
EINGANGSEINHEIT / RECHNERSTEUERUNG
23
SUB-KNOTEN-EINHEIT
26
48,8
WEGPROZESSOR
25
VERGLEICHS-SCHALTUNG
42
8
RÜCKMELDUNG ZIEL
MAXIMUM-ZÄHLER
41
VON 33
NEGATIONS-FOLGERECHNER
38
39
40
ZU 34
SCHRITTSPEICHER
ZIELSPEICHER
WEG-LÄNGENZÄHLER
8
35
36
37
24
KONTEXTUR-RECHNER

FIG. 6

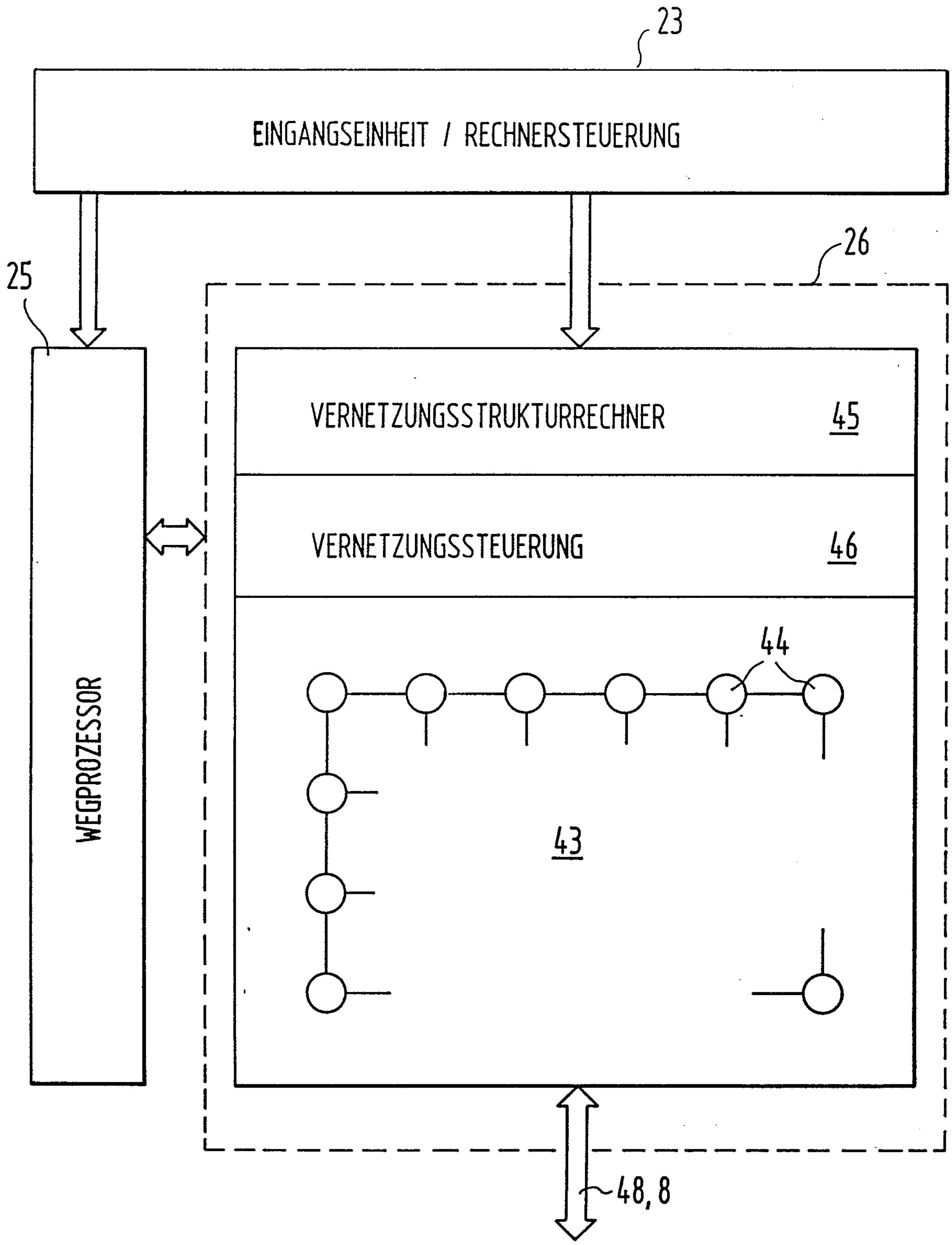
23
EINGANGSEINHEIT / RECHNERSTEUERUNG
26
25
VERNETZUNGSSTRUKTURRECHNER
45
VERNETZUNGSSTEUERUNG
46
WEGPROZESSOR
44
43
48, 8

FIG. 7